(19) Europäisches Patentamt
European Patent Office
Office européen des brevets

(11) EP 3 650 472 A1

(12) EUROPEAN PATENT APPLICATION

(43) Date of publication:
**13.05.2020 Bulletin 2020/20**

(51) Int Cl.:
***C08C 19/02** (2006.01)* ***B60C 1/00** (2006.01)*
***C08L 9/06** (2006.01)* ***C08L 15/00** (2006.01)*

(21) Application number: **19206965.6**

(22) Date of filing: **04.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.11.2018 JP 2018212215**

(71) Applicant: **Sumitomo Rubber Industries, Ltd.**
**Kobe-shi, Hyogo-ken 651-0072 (JP)**

(72) Inventor: **KATO, Fumiya**
**Kobe-shi, Hyogo-ken, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) A pneumatic tire having excellent durability and ozone resistance is provided. The pneumatic tire includes a tread portion in which a cap tread and a base tread are layered, an adhesive force between a cap tread rubber composition forming the cap tread and a base tread rubber composition forming the base tread is not less than 9 MPa, and the cap tread rubber composition satisfies the following formula (A).

$$\text{Elongation at break before ozone deterioration} \leq \text{elongation at break after ozone deterioration} \qquad (A)$$

EP 3 650 472 A1

## Description

BACKGROUND OF THE INVENTION

Field of the Invention

The present invention relates to a pneumatic tire.

Description of the Background Art

In recent years, due to the growing interest in environmental issues, the demand for reducing fuel consumption has been increasing for automobiles, so that rubber compositions used for automotive tires have been required to have excellent low fuel consumption performance. As a method for improving low fuel consumption performance, for example, International Publication WO2016/039005 discloses a method of blending a hydrogenated copolymer.

In a diene-based rubber that is used for a general tire rubber composition, usually, double bond moieties are oxidized due to ozone deterioration, and the elongation at break of the rubber decreases, whereby the breaking strength of the rubber tends to decrease. Meanwhile, a hydrogenated copolymer has fewer double bond moieties than the diene-based rubber, and thus has a feature that reduction of elongation at break due to ozone deterioration is less likely to occur.

However, when a large amount of a hydrogenated copolymer is blended, the co-crosslinkability with an adjacent member containing no hydrogenated copolymer tends to deteriorate. Therefore, for example, when the rubber composition is used for a cap tread, the adhesive strength between the cap tread and a base tread may decrease, and peeling may occur at the interface between the cap tread and the base tread, so that the durability of a tire may decrease.

SUMMARY OF THE INVENTION

The present invention has been made to solve the above-described problem, and an object of the present invention is to provide a pneumatic tire having excellent durability and ozone resistance.

The present invention is directed to a pneumatic tire comprising a tread portion in which a cap tread and a base tread are layered, wherein an adhesive force between a cap tread rubber composition forming the cap tread and a base tread rubber composition forming the base tread is not less than 9 MPa, and the cap tread rubber composition satisfies the following formula (A).

$$\text{Elongation at break before ozone deterioration} \leq \text{elongation at break after ozone deterioration} \qquad \text{(A)}$$

A rubber component of the cap tread rubber composition preferably includes a hydrogenated copolymer that has aromatic vinyl moieties as constituent units based on an aromatic vinyl compound and conjugated diene moieties as constituent units based on a conjugated diene compound and in which a degree of hydrogenation of the conjugated diene moieties is not less than 75 mol%, and an amount of the hydrogenated copolymer in 100% by mass of the rubber component is preferably not greater than 50% by mass, and more preferably 30 to 50% by mass.

According to the present invention, in the pneumatic tire, the adhesive force between the cap tread rubber composition and the base tread rubber composition is not less than 9 MPa and the cap tread rubber composition satisfies formula (A), and thus excellent durability and ozone resistance are achieved.

DESCRIPTION OF THE PREFERRED EMBODIMENTS

The pneumatic tire according to the present invention includes a tread portion in which a cap tread and a base tread are layered, an adhesive force between a cap tread rubber composition forming the cap tread and a base tread rubber composition forming the base tread is not less than 9 MPa, and the cap tread rubber composition satisfies the following formula (A).

$$\text{Elongation at break before ozone deterioration} \leq \text{elongation at break after ozone deterioration} \qquad \text{(A)}$$

In the pneumatic tire, since the adhesive force between the cap tread rubber composition and the base tread rubber composition is not less than 9 MPa, sufficient adhesive strength can be ensured between the cap tread and the base tread.
Moreover, although the elongation at break of a diene-based rubber usually tends to decrease due to ozone deterioration as described above, since the cap tread rubber composition satisfies formula (A) in the pneumatic tire, the pneumatic tire has high ozone resistance and reduction of breaking strength is less likely to occur. Owing to these effects, it is inferred that excellent durability and ozone resistance are achieved.
The adhesive force between the cap tread rubber composition and the base tread rubber composition only has to be not less than 9 MPa, but is preferably not less than 13 MPa, more preferably not less than 15 MPa, and further preferably not less than 18 MPa. The upper limit of the adhesive force is not particularly limited, but the adhesive force is normally not greater than 30 MPa. When the adhesive force is within the above range, the effects tend to be more favorably achieved.
The adhesive force is measured by carrying out a peeling test on a strip-shaped sample according to JIS K6256-1: 2013 at a tensile speed of 50 mm/min at 23°C. As the sample, a sample, which is obtained by interposing a PET film having a 1 cm square hole between a 2 mm-thick sheet formed from an unvulcanized cap tread rubber composition and a 2 mm-thick sheet formed from an unvulcanized base tread rubber composition, vulcanizing this stack at 17°C for 12 minutes, and adhering the PET film and the sheets only at the hole portion of the PET film, is used.
The adhesive force between the cap tread rubber composition and the base tread rubber composition can be adjusted on the basis of the blending contents (particularly, the type and the amount of a rubber component) of each composition.

<Cap Tread Rubber Composition>

The cap tread rubber composition only has to satisfy the following formula (A), that is, the elongation at break thereof after ozone deterioration only has to be equal to or greater than that before ozone deterioration. From the viewpoint of durability, the elongation at break after ozone deterioration is preferably greater than that before ozone deterioration (that is, the following formula (A) is preferably elongation at break before ozone deterioration < elongation at break after ozone deterioration).

$$\text{Elongation at break before ozone deterioration} \leq \text{elongation at break after ozone deterioration} \qquad (A)$$

Moreover, from the same viewpoint, the cap tread rubber composition preferably satisfies the following formula (B).

$$\text{Elongation at break after ozone deterioration/elongation at break before ozone deterioration} \times 100 \geq 102 \qquad (B)$$

The elongation at break is measured by carrying out a tensile test at 23°C according to JIS K 6251: 2017 using a No. 3 dumbbell type test piece formed from the vulcanized cap tread rubber composition.
Moreover, the elongation at break after ozone deterioration is measured after the above test piece is allowed to stand in an environmental testing machine with an ozone concentration of 50 ppm and a temperature of 40°C for 24 hours and then is taken out therefrom.
The method for obtaining the cap tread rubber composition that satisfies formula (A) is not particularly limited, but an example of the method is a method of using a (co)polymer having few double bond moieties as the rubber component. Such a (co)polymer is preferably a hydrogenated copolymer that has aromatic vinyl moieties as constituent units based on an aromatic vinyl compound and conjugated diene moieties as constituent units based on a conjugated diene compound and in which the degree of hydrogenation of the conjugated diene moieties is not less than 75 mol%.
The hydrogenated copolymer is obtained by hydrogenating a copolymer of the aromatic vinyl compound and the conjugated diene compound and has few double bond moieties. Thus, it is considered that reduction of elongation at break at the time of ozone deterioration is less likely to occur and crosslink density uniformity at the time of ozone deterioration improves. Therefore, it is inferred that, by using the hydrogenated copolymer, the elongation at break after ozone deterioration becomes equal to or greater than that before ozone deterioration.
Examples of the aromatic vinyl compound include styrene, $\alpha$-methylstyrene, 1-vinylnaphthalene, 3-vinyltoluene,

ethylvinylbenzene, divinylbenzene, 4-cyclohexylstyrene, and 2,4,6-trimethylstyrene. These compounds may be used individually, or two or more of these compounds may be used in combination, but styrene is preferable.

Examples of the conjugated diene compound include 1,3-butadiene, isoprene, 1,3-pentadiene, 2,3-dimethylbutadiene, 2-phenyl-1,3-butadiene, and 1,3-hexadiene. These compounds may be used individually, or two or more of these compounds may be used in combination, but 1,3-butadiene and isoprene are preferable, and 1,3-butadiene is more preferable.

Therefore, the hydrogenated copolymer is preferably a hydrogenated product of a copolymer of styrene and 1,3-butadiene, that is, a hydrogenated styrene-butadiene copolymer (hydrogenated SBR). In addition, the hydrogenated styrene-butadiene copolymer is preferably a hydrogenated modified styrene-butadiene copolymer (hydrogenated modified SBR) that is modified by a later-described method.

In the hydrogenated copolymer, the order of copolymerization of the aromatic vinyl compound and the conjugated diene compound is not particularly limited, and either random copolymerization or block copolymerization may be employed, but random copolymerization is preferable.

The degree of hydrogenation of the conjugated diene moieties of the hydrogenated copolymer only has to be not less than 75 mol%, but, from the viewpoint of durability and ozone resistance, the degree of hydrogenation is preferably not less than 80 mol%, more preferably not less than 90 mol%, and further preferably not less than 95 mol%, and may be 100 mol%. Meanwhile, from the viewpoint of adhesion with the base tread rubber composition, the degree of hydrogenation is preferably not greater than 95 mol%, more preferably not greater than 90 mol%, and further preferably not greater than 80 mol%.

The degree of hydrogenation can be calculated from the rate of decrease in the intensity of a spectrum, corresponding to unsaturated bond part, obtained through $^1$H-NMR measurement.

The weight-average molecular weight (Mw) of the hydrogenated copolymer is preferably not less than 200 thousand, more preferably not less than 400 thousand, and further preferably not less than 450 thousand, and is preferably not greater than 2 million, more preferably not greater than 1 million, and further preferably not greater than 700 thousand. When the Mw is within the above range, the effects tend to be more favorably achieved.

The weight-average molecular weight (Mw) can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation). In the case of a copolymer having a modified group, the modified group interacts with the silica gel of the column and an accurate Mw cannot be obtained, and thus Mw measurement is performed before modification treatment is performed.

In the hydrogenated copolymer, the content of the aromatic vinyl moieties (styrene content in the case of a hydrogenated SBR) is preferably not less than 20% by mass and further preferably not less than 30% by mass, and is preferably not greater than 50% by mass and more preferably not greater than 40% by mass. When the content of the aromatic vinyl moieties is within the above range, the effects tend to be more favorably achieved.

The content of the aromatic vinyl moieties can be measured by $^1$H-NMR measurement.

The hydrogenated copolymer can be synthesized, for example, by the following method.

(Polymerization Method)

The polymerization method for the copolymer of the aromatic vinyl compound and the conjugated diene compound is not particularly limited, and any of a solution polymerization method, a vapor phase polymerization method, and a bulk polymerization method can be used, but a solution polymerization method is particularly preferable. Moreover, the polymerization may be carried out in a batch mode or in a continuous mode.

In the case where a solution polymerization method is used, the monomer concentration (the total concentration of styrene and 1,3-butadiene in the case of a styrene-butadiene copolymer) in a solvent is preferably not less than 5% by mass and more preferably not less than 10% by mass. If the monomer concentration in the solvent is less than 5% by mass, the amount of the obtained copolymer tends to be small, resulting in increased cost. In addition, the monomer concentration in the solvent is preferably not greater than 50% by mass and more preferably not greater than 30% by mass. If the monomer concentration in the solvent is greater than 50% by mass, the solution tends to become too viscous to stir easily, and thus polymerization tends not to occur easily.

(Polymerization Initiator in Anionic Polymerization)

In the case of performing anionic polymerization, a polymerization initiator is not particularly limited, but an organic lithium compound is preferably used. The organic lithium compound is preferably a lithium having a C2-C20 alkyl group, and examples of the organic lithium compound include ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclopentyllithium, and reaction products of diisopropenylbenzene

and butyllithium. Among them, from the viewpoint of availability, safety, etc., n-butyllithium or sec-butyllithium is preferable.

The polymerization reaction may be carried out in the presence of a compound (R) obtained by mixing at least one of the organic lithium compounds described above with a compound (B1) having a functional group that is interactive with silica. When the polymerization is carried out in the presence of the compound (R), the functional group that is interactive with silica can be introduced to the polymerization initiating terminal of the copolymer. Thus, the copolymer has a modified polymerization initiating terminal. The term "interactive" in the present specification means formation of a covalent bond or an intermolecular force weaker than covalent bonds (for example, electromagnetic forces acting between molecules such as ion-dipole interaction, dipole-dipole interaction, hydrogen bond, or van der Waals force) between molecules. The term "functional group that is interactive with silica" refers to a group having at least one atom that is interactive with silica, such as a nitrogen atom, a sulfur atom, a phosphorus atom, or an oxygen atom.

The compound (R) is preferably a reaction product of an organic lithium compound and a nitrogen-containing compound such as a secondary amine compound, among others. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tert-butyldimethylsilyl)piperazine, and 1,3-ditrimethylsilyl-1,3,5-triazinane. In the case of carrying out the polymerization in the presence of the compound (R), the polymerization may be carried out by preliminarily mixing an organic lithium compound with a compound (B1) to prepare a compound (R), and adding the compound (R) to the polymerization system followed by polymerization. Alternatively, the polymerization may be carried out by adding an organic lithium compound and a compound (B1) to the polymerization system and mixing these compounds in the polymerization system to prepare a compound (R) followed by polymerization.

(Method for Anionic Polymerization)

The method for carrying out anionic polymerization using the above polymerization initiator to produce the copolymer is not particularly limited, and conventionally known methods can be used.

Specifically, a target copolymer such as a styrene-butadiene copolymer can be obtained by anionically polymerizing, for example, styrene and 1,3-butadiene in an organic solvent that is inert to the reaction, for example, in a hydrocarbon solvent such as an aliphatic, alicyclic, or aromatic hydrocarbon compound, for example, using butyllithium as a polymerization initiator, optionally in the presence of a randomizer.

(Hydrocarbon Solvent in Anionic Polymerization)

The hydrocarbon solvent is preferably a C3-C8 hydrocarbon solvent, and examples of the hydrocarbon solvent include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These solvents may be used individually, or two or more of these solvents may be mixed and used.

(Randomizer in Anionic Polymerization)

The randomizer refers to a compound that has the function of controlling the microstructure of the conjugated diene moieties in a copolymer, for example, by increasing 1,2-bonds in butadiene or 3,4-bonds in isoprene, or the function of controlling the compositional distribution of monomer units in a copolymer, for example, by randomizing styrene units and butadiene units in a styrene-butadiene copolymer. The randomizer is not particularly limited, and any known compound that is commonly and conventionally used as a randomizer may be used. Examples of the randomizer include ethers and tertiary amines, such as dimethoxybenzene, tetrahydrofuran, dimethoxyethane, diethylene glycol dibutyl ether, diethylene glycol dimethyl ether, bis(tetrahydrofuryl)propane, triethylamine, pyridine, N-methylmorpholine, N,N,N',N'-tetramethylethylenediamine, and 1,2-dipiperidinoethane. In addition, potassium salts such as potassium-t-amylate and potassium-t-butoxide, and sodium salts such as sodium-t-amylate, may also be used. These randomizers may be used individually, or two or more of these randomizers may be used in combination. The amount of the randomizer to be used per mol of the organic lithium compound is preferably not less than 0.01 molar equivalent and more preferably not less than 0.05 molar equivalent. If the amount of the randomizer is less than 0.01 molar equivalent, the effect achieved by the addition of the randomizer tends to be small, and thus randomization tends not to occur easily. In addition, the amount of the randomizer to be used per mol of the organic lithium compound is preferably not greater than 1000 molar equivalent and more preferably not greater than 500 molar equivalent. If the amount of the randomizer is greater than 1000 molar equivalent, the reaction rate of monomers tends to change greatly, and, conversely, randomization tends not to occur easily.

The Tg of the copolymer can be adjusted by changing the type or amount of the randomizer. For example, the

Tg of the copolymer may be decreased by reducing the amount of tetrahydrofuran.

(Reaction Temperature)

The reaction temperature during the anionic polymerization is not particularly limited as long as the reaction suitably proceeds. In general, the reaction temperature is preferably -10°C to 100°C and more preferably 25°C to 70°C.

(Modification Step)

A functional group that is interactive with silica can be introduced to the polymerization terminating terminal of the copolymer obtained by the above polymerization step, by the step of reacting the active terminal of the copolymer with a compound (B2) having a functional group that is interactive with silica. Accordingly, the copolymer has a modified polymerization terminating terminal. The term "terminal" in the present invention refers to a portion at an end of the molecular chain, excluding monomer-derived structures having carbon-carbon double bonds.

The copolymer used in the above modification reaction (hereinafter, also referred to as terminal modification reaction) may be either a copolymer having a modified polymerization initiating terminal or a copolymer having an unmodified polymerization initiating terminal, as long as the copolymer has an active terminal. In addition, the compound (B2) is not particularly limited as long as the compound (B2) is a compound that has a functional group interactive with silica and that is capable of reacting with the polymerization active terminal. Preferable specific examples of the compound (B2) include:

(I) a compound (B2-1) represented by the following Formula (1)

[Chem. 1]

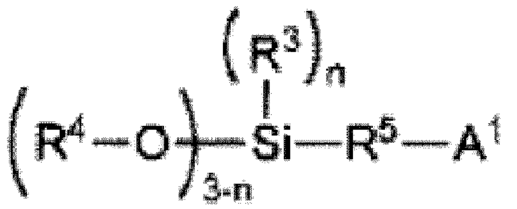

(1)

wherein $A^1$ represents a monovalent functional group that has no active hydrogen, that has at least one atom selected from the group consisting of a nitrogen atom, a phosphorus atom, and a sulfur atom, and that is bound to $R^5$ through a nitrogen atom, a phosphorus atom, or a sulfur atom, $R^3$ and $R^4$ each represent a hydrocarbyl group, $R^5$ represents a hydrocarbylene group, and n represents an integer of 0 to 2. When a plurality of $R^3$s or $R^4$s are present, they may be the same or different from each other;

(II) a compound (B2-2) that has, in the molecule, one or more functional groups (x1) of at least one type selected from the group consisting of a cyclic ether group, a (thio)carbonyl group, and an iso(thio)cyanate group, and one or more groups (x2) that are different from the functional groups (x1) and that have no active hydrogen but have at least one atom selected from the group consisting of a nitrogen atom, a phosphorus atom, an oxygen atom, and a sulfur atom, at least one of which may be protected by a trisubstituted hydrocarbylsilyl group; and

(III) a compound (B2-3) having two or more iso(thio)cyanate groups in the molecule. As the compound (B2), one of these compounds can be used alone, or two or more of these compounds can be used in combination. In the present specification, the term "(thio)carbonyl group" refers to a carbonyl group and a thiocarbonyl group, and the term "iso(thio)cyanate group" refers to an isocyanate group and an isothiocyanate group.

The hydrocarbyl group for $R^3$ and $R^4$ in the above formula (1) is preferably a linear or branched C1-C20 alkyl group, a C3-C20 cycloalkyl group, or a C6-C20 aryl group.

$R^5$ is preferably a linear or branched C1-C20 alkanediyl group, a C3-C20 cycloalkylene group, or a C6-C20 arylene group.

From the viewpoint of increasing the reactivity with the copolymer, n is preferably 0 or 1.

$A^1$ has at least one atom selected from the group consisting of a nitrogen atom, a phosphorus atom, and a sulfur atom (hereinafter, also referred to as specific atom), and is bound to $R^5$ through the specific atom. The specific atom is bound to no active hydrogen, and may be protected by, for example, a trisubstituted hydrocarbylsilyl group. The

term "active hydrogen" herein refers to a hydrogen atom bound to an atom other than a carbon atom, and preferably refers to a hydrogen atom having a lower bond energy than the carbon-hydrogen bond of polymethylene.

$A^1$ is preferably a group that can be converted to an onium ion by the action of an onium salt-forming agent, among others. The compound (B2) having such a group ($A^1$) can impart excellent shape-retaining properties to the modified copolymer.

Specific examples of $A^1$ include a nitrogen-containing group obtained by substituting two hydrogen atoms of a primary amino group with two protecting groups; a nitrogen-containing group obtained by substituting one hydrogen atom of a secondary amino group with one protecting group; a tertiary amino group; an imino group; a pyridyl group; a phosphorus-containing group obtained by substituting two hydrogen atoms of a primary phosphino group with two protecting groups; a phosphorus-containing group obtained by substituting one hydrogen atom of a secondary phosphino group with one protecting group; a tertiary phosphino group; and a sulfur-containing group obtained by substituting one hydrogen atom of a thiol group with one protecting group. Among these groups, from the viewpoint of having good affinity with silica, groups having a nitrogen atom are preferable. The term "protecting group" refers to a functional group that converts $A^1$ to a functional group that is inert to the polymerization active terminal, and an example thereof is a trisubstituted hydrocarbylsilyl group.

Specific examples of the compound (B2-1) include, as compounds having both an alkoxysilyl group and a nitrogen-containing group obtained by substituting two hydrogen atoms of a primary amine with two protecting groups, a nitrogen-containing group obtained by substituting one hydrogen atom of a secondary amine with one protecting group, or a tertiary amino group, N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, and 3-(4-trimethylsilyl-1-piperazino)propylmethyldimethoxysilane.

Specific examples of the compound (B2-1) also include, as compounds having both an alkoxysilyl group and an imino group or a pyridyl group: N-(1,3-dimethylbutylidene)-3-(triethoxysilyl)-1-propaneamine, N-(1 -methylpropylidene)-3 -(triethoxysilyl)-1 -propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl, methyldiethoxysilyl, and ethyldimethoxysilyl compounds corresponding to the foregoing triethoxysilyl compounds; N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole,N-(3-triethoxysilylpropyl)-4,5-imidazole, 3-hexamethyleneiminopropyltrimethoxysilane, 3-hexamethyleneiminopropylmethyldimethoxysilane; and compounds obtained by replacing the alkyl groups and the alkanediyl groups in the above compounds with C1-C6 alkyl groups and C1-C6 alkanediyl groups, respectively.

Specific examples of the compound (B2-1) also include, as compounds having both an alkoxysilyl group and a phosphorus-containing group obtained by substituting two hydrogen atoms of a primary phosphino group with two protecting groups, a phosphorus-containing group obtained by substituting one hydrogen atom of a secondary phosphino group with one protecting group, a tertiary phosphino group, or a sulfur-containing group obtained by substituting one hydrogen atom of a thiol group with one protecting group; P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3 -diphenylphosphinopropyltrimethoxysilane, 3-diphenylphosphinopropyltriethoxysilane, 3-diphenylphosphinopropylmeryldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and compounds obtained by replacing the alkyl groups and the alkanediyl groups in the above compounds with C1-C6 alkyl groups and C1-C6 alkanediyl groups, respectively. In addition, examples of compounds having an iso(thio)cyanate group include 3-isocyanatopropyltrimethoxysilane and 3-isocyanatopropyltriethoxysilane.

In the compound (B2-2), the groups (x2) are preferably groups having a nitrogen atom bound to no active hydrogen. Specific examples of such compounds include:

as compounds having a cyclic ether group, epoxy amine compounds such as tetraglycidyl-1,3-bisaminomethylcyclohexane;

as compounds containing a (thio)carbonyl group, 4-aminoacetophenones such as 4-N,N-dimethylaminobenzophenone, bis(dihydrocarbylaminoalkyl)ketones such as 1,7-bis(methylethylamino)-4-heptanone, dihydrocarbylaminoalkyl(meth)acrylates such as 2-dimethylaminoethyl acrylate, hydrocarbylimidazolidinones such as 1,3-dimethyl-2-imidazolidinone, N-hydrocarbylpyrrolidones such as 1-phenyl-2-pyrrolidone, N-hydrocarbylcaprolactams such as N-methyl-ε-caprolactam, N-dihydrocarbylformamides such as N,N-diethylformamide, N,N-dihydrocarbylacetamides such as N,N-dimethylacetamide, and (meth)acrylamides such as N,N-dimethylacrylamide; and

as compounds containing an iso(thio)cyanate group, 3-isocyanatopropyltrimethoxysilane.

Examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl)thiophosphate, xylene diisocyanate, benzene-1,2,4-triisocyanate, naphthalene-1,2,5,7-tetraisocyanate, and 1,4-phenylene diisothiocyanate.

In particular, the compound (B2-1) is preferably used as the compound (B2) because it has high affinity with silica. In the case of using a silane compound (B2-1), silicon tetrachloride, an epoxy-containing compound (for example, tetraglycidyl-1,3-bisaminomethylcyclohexane, etc.), or the like, may be used together with the silane compound (B2-1) for the purpose of adjusting the Mooney viscosity of the modified copolymer. The compounds (B2) described above as examples all have the same function in that a modified copolymer having a modified polymerization terminating terminal can be obtained. Therefore, compounds that are not mentioned in EXAMPLES described later can also be used in the present invention. A structure represented by the following formula (1-1) is introduced to the polymer terminal by a reaction between the compound represented by the above formula (1) and the modified copolymer.

[Chem. 2]

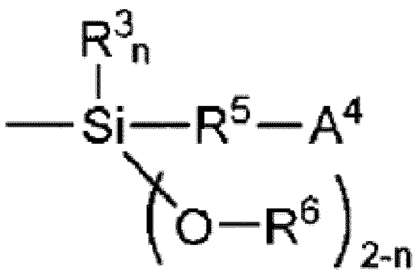

(1-1)

wherein: $R^6$ represents a hydrogen atom or a hydrocarbyl group; when a plurality of $R^6$s are present, they may be the same or different from each other; examples of the hydrocarbyl group for $R^6$ include hydrocarbyl groups that are the same as those for $R^3$ and $R^4$ in the above formula (1); and $A^4$, $R^3$, $R^5$ and n have the same meanings as $A^1$, $R^3$, $R^5$, and n in the above formula (1).

The above terminal modification reaction can be carried out as a solution reaction, for example. The solution reaction may be carried out using a solution containing unreacted monomers obtained after completion of the polymerization reaction in the above polymerization step, or may be carried out after the copolymer is isolated from the above solution and dissolved in an appropriate solvent such as cyclohexane. The terminal modification reaction may be carried out either batchwise or continuously. At this time, the method for adding the compound (B2) is not particularly limited, and the compound (B2) may be added, for example, at one time, in portions, or continuously.

The amount of the compound (B2) to be used for the terminal modification reaction may be set as appropriate according to the type of compound used for the reaction. The amount of the compound (B2) is preferably not less than 0.1 molar equivalent and more preferably not less than 0.3 molar equivalent with respect to the metal atom of the polymerization initiator that is involved in the polymerization reaction. When the amount is set to be not less than 0.1 molar equivalent, the modification reaction can proceed sufficiently, and the dispersibility of silica can be suitably improved.

The temperature of the terminal modification reaction is usually equal to the temperature of the polymerization reaction, and is preferably -20 to 150°C, more preferably 0 to 120°C, and particularly preferably 20 to 100°C. If the temperature of the modification reaction is low, the viscosity of the modified copolymer tends to increase. On the other hand, if the temperature of the modification reaction is high, the polymerization active terminal becomes easily deactivated. The reaction time of the modification reaction is preferably one minute to five hours, and more preferably two minutes to one hour.

(Termination of Reaction)

The anionic polymerization can be terminated by addition of a reaction terminator that is usually used in this field. Examples of the reaction terminator include polar solvents containing active protons such as acetic acid and alcohols including methanol, ethanol, isopropanol, etc., mixtures of these polar solvents, and mixtures of these polar solvents and nonpolar solvents such as hexane and cyclohexane. Usually, the amount of the reaction terminator to be added is sufficient when it is about equal to or twice the molar amount of the anionic polymerization initiator.

(Coupling)

In the method for producing the above copolymer, a coupling agent may be added to the hydrocarbon solution

of the copolymer at any time from the initiation of the polymerization of monomers until the polymer is recovered as described later. Examples of the coupling agent include a compound represented by the following formula (2-1):

$$R^1{}_aML_{4-a} \qquad (2\text{-}1)$$

wherein $R^1$ represents an alkyl group, an alkenyl group, a cycloalkenyl group, or an aryl group, M represents a silicon atom or a tin atom, L represents a halogen atom or a hydrocarbyloxy group, and a represents an integer of 0 to 2.

Examples of the coupling agent represented by the above formula (2-1) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

In order to enhance the processability of the polymer, the amount of the coupling agent to be added per mol of the alkali metal derived from an alkali metal catalyst is preferably not less than 0.03 mol and more preferably not less than 0.05 mol. In order to enhance low fuel consumption performance, the amount is preferably not greater than 0.4 mol and more preferably not greater than 0.3 mol.

(Hydrogenation Method)

In the method for producing the hydrogenated copolymer, the copolymer described above is hydrogenated to obtain a hydrogenated copolymer having a degree of hydrogenation of 30 to 100 mol%. The hydrogenation of the copolymer advantageously improves heat resistance. If the degree of hydrogenation is low, the effects of improving rubber breaking strength and abrasion resistance are not sufficiently achieved.

The method and the reaction conditions for the hydrogenation are not particularly limited, and the hydrogenation may be carried out by a known method under known conditions. Usually, the hydrogenation is carried out at 20 to 150°C under a hydrogen pressure of 0.1 to 10 MPa in the presence of a hydrogenation catalyst. The degree of hydrogenation may be optionally selected by changing, for example, the amount of the hydrogenation catalyst, the hydrogen pressure during the hydrogenation reaction, or the reaction time. As the hydrogenation catalyst, a compound containing any of the metals of groups 4 to 11 of the periodic table of elements can be usually used. For example, compounds containing any of Ti, V, Co, Ni, Zr, Ru, Rh, Pd, Hf, Re, and Pt atoms can be used as the hydrogenation catalyst. More specific examples of the hydrogenation catalyst include: metallocene compounds containing Ti, Zr, Hf, Co, Ni, Pd, Pt, Ru, Rh, Re, etc.; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as organoaluminum; organometallic compounds or complexes of Ru, Rh, etc.; and fullerenes and carbon nanotubes in which hydrogen is stored.

Among them, metallocene compounds containing any of Ti, Zr, Hf, Co, and Ni are preferable because they allow the hydrogenation reaction to be conducted in a homogeneous system in an inert organic solvent. Furthermore, metallocene compounds containing any of Ti, Zr, and Hf are preferable. In particular, hydrogenation catalysts obtained by reaction of titanocene compounds and alkyllithiums are preferable because such catalysts are inexpensive and industrially very useful. Specific examples of such hydrogenation catalysts include hydrogenation catalysts described in, for example, Japanese Laid-Open Patent Publication Nos. H1-275605, H5-271326, H5-271325, H5-222115, H11-292924, 2000-37632, S59-133203, S63-5401, S62-218403, H7-90017, and Japanese Examined Patent Publication Nos. S43-19960 and S47-40473. One of these hydrogenation catalysts may be used alone, or two or more of these hydrogenation catalysts may be used in combination.

In the above-described cap tread rubber composition, the amount of the hydrogenated copolymer in 100% by mass of the rubber component is preferably not greater than 70% by mass, more preferably not greater than 50% by mass, and further preferably not greater than 40% by mass, and is preferably not less than 30% by mass. When the amount is within the above range, the effects tend to be more favorably achieved.

In the cap tread rubber composition, examples of usable rubber components other than the hydrogenated copolymer include natural rubber (NR), isoprene rubber (IR), and diene-based rubbers such as styrene-butadiene rubber (SBR), butadiene rubber (BR), acrylonitrile butadiene rubber (NBR), and styrene-isoprene-butadiene rubber (SIBR). One of these rubbers may be used alone, or two or more of these rubbers may be used in combination. Among them, SBR and BR are preferable.

The SBR is not particularly limited, and, for example, an emulsion-polymerized styrene-butadiene rubber (E-SBR), a solution-polymerized styrene-butadiene rubber (S-SBR), and the like can be used. As commercially available products, products of Sumitomo Chemical Co., Ltd., JSR Corporation, Asahi Kasei Corporation, Zeon Corporation, etc., can be used. One of these SBRs may be used alone, or two or more of these SBRs may be used in combination.

The SBR may be either an unmodified SBR or a modified SBR.

The modified SBR only needs to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with a C1-C6 alkyl group), an alkoxy group (preferably, a C1-C6 alkoxy group), and an alkoxysilyl group (preferably, a C1-C6 alkoxysilyl group) are preferable.

The styrene content of the SBR is preferably not less than 20% by mass and more preferably not less than 35% by mass, and is preferably not greater than 60% by mass and more preferably not greater than 50% by mass. When the styrene content is within the above range, the effects tend to be more favorably achieved.

The styrene content of the SBR can be measured by $^1$H-NMR measurement.

The vinyl content of the SBR is preferably not less than 15% by mass and more preferably not less than 30% by mass, and is preferably not greater than 50% by mass and more preferably not greater than 40% by mass. When the vinyl content is within the above range, the effects tend to be more favorably achieved.

The vinyl content (1,2-bond butadiene unit content) of the SBR can be measured by infrared absorption spectrometry.

The weight-average molecular weight (Mw) of the SBR is preferably not less than 600 thousand, more preferably not less than 800 thousand, and further preferably not less than 950 thousand, and is preferably not greater than 1.5 million and more preferably not greater than 1.2 million. When the Mw is within the above range, the effects tend to be more favorably achieved.

In the case where the cap tread rubber composition contains an SBR, the amount of the SBR in 100% by mass of the rubber component is preferably not less than 30% by mass and more preferably not less than 40% by mass, and is preferably not greater than 60% by mass and more preferably not greater than 50% by mass. When the amount is within the above range, the effects tend to be more favorably achieved.

The BR is not particularly limited, and a BR having a high cis content, a BR having a low cis content, a BR containing syndiotactic polybutadiene crystal, etc., can be used. In addition, the BR may be a modified BR into which the aforementioned functional group is introduced. As commercially available products, products of Ube Industries, Ltd., JSR Corporation, Asahi Kasei Corporation, Zeon Corporation, etc., can be used. These BRs may be used individually, or two or more of these BRs may be used in combination.

The cis content of the BR is preferably not less than 40% by mass, more preferably not less than 95% by mass, and further preferably not less than 97% by mass. The upper limit of the cis content is not particularly limited. When the cis content is within the above range, the effect tends to be more favorably achieved.

The cis content of the BR can be measured by infrared absorption spectrometry.

In the case where the cap tread rubber composition contains a BR, the amount of the BR in 100% by mass of the rubber component is preferably not less than 5% by mass and more preferably not less than 10% by mass, and is preferably not greater than 30% by mass and more preferably not greater than 20% by mass. When the amount is within the above range, the effects tend to be more favorably achieved.

The cap tread rubber composition may contain carbon black.

The carbon black is not particularly limited, and examples thereof include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination.

The nitrogen adsorption specific surface area ($N_2SA$) of the carbon black is preferably not less than 75 $m^2/g$ and more preferably not less than 95 $m^2/g$, and is preferably not greater than 120 $m^2/g$ and more preferably not greater than 100 $m^2/g$. When the $N_2SA$ is within the above range, the effects tend to be more favorably achieved.

The $N_2SA$ of the carbon black is a value measured according to JIS K6217-2: 2001.

In the case where the cap tread rubber composition contains carbon black, the amount of the carbon black per

100 parts by mass of the rubber component is preferably not less than 5 parts by mass, more preferably not less than 8 parts by mass, and further preferably not less than 10 parts by mass, and is preferably not greater than 30 parts by mass and more preferably not greater than 20 parts by mass. When the amount is within the above range, the effects of the present invention are more favorably achieved.

The cap tread rubber composition may contain silica.

Examples of the silica include dry-process silica (silicic anhydride) and wet-process silica (hydrous silicic acid), but wet-process silica is preferable for the reason that it has a higher silanol group content. As commercially available products, products of Evonik Degussa GmbH, Tosoh Silica Corporation, Solvay Japan, Ltd., Tokuyama Corporation, etc., can be used. One of these types of silica may be used alone, or two or more thereof may be used in combination.

The nitrogen adsorption specific surface area ($N_2SA$) of the silica is preferably not less than 100 $m^2/g$ and more preferably not less than 150 $m^2/g$, and is preferably not greater than 250 $m^2/g$, more preferably not greater than 220 $m^2/g$, and further preferably not greater than 200 $m^2/g$. When the nitrogen adsorption specific surface area is within the above range, the effects tend to be more favorably achieved.

The nitrogen adsorption specific surface area of the silica is a value measured by the BET method according to ASTM D3037-81.

In the case where the cap tread rubber composition contains silica, the amount of the silica per 100 parts by mass of the rubber component is preferably not less than 60 parts by mass and more preferably not less than 80 parts by mass, and is preferably not greater than 120 parts by mass and more preferably not greater than 100 parts by mass. When the amount is within the above range, the effects tend to be more favorably achieved.

In the case where the cap tread rubber composition contains silica, the cap tread rubber composition preferably further contains a silane coupling agent

The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination.

In the case where the cap tread rubber composition contains a silane coupling agent, the amount of the silane coupling agent per 100 parts by mass of the silica is preferably not less than 1 part by mass and more preferably not less than 3 parts by mass, and is preferably not greater than 12 parts by mass and more preferably not greater than 8 parts by mass. When the amount is within the above range, the effects tend to be more favorably achieved.

The cap tread rubber composition may contain an adhesive resin.

Examples of the adhesive resin include: aromatic hydrocarbon-based resins such as phenol-based resins, alkylphenol-based resins, terpene-based resins, coumarone-based resins, indene-based resins, coumarone-indene-based resins, styrene-based resins, acrylic-based resins, rosin-based resins, and dicyclopentadiene-based resins (DCPD-based resins), all of which are commonly used in the tire industry; aliphatic hydrocarbon-based resins such as C5 resins, C8 resins, C9 resins, and C5/C9 resins; and hydrogenated products of these resins. As commercially available products, products of Maruzen Petrochemical Co., Ltd., Sumitomo Bakelite Co., Ltd., YASUHARA CHEMICAL CO., LTD, Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Zeon Corporation, Harima Chemicals, Inc., TOAGOSEI CO., LTD., Arakawa Chemical Industries, Ltd., Taoka Chemical Co., Ltd., etc., can be used. These resins may be used individually, or two or more of these resins may be used in combination.

In the case where the cap tread rubber composition contains an adhesive resin, the amount of the adhesive resin per 100 parts by mass of the rubber component is preferably not less than 1 part by mass and more preferably not less than 5 parts by mass, and is preferably not greater than 30 parts by mass and more preferably not greater than 20 parts by mass. When the amount is within the above range, the effects tend to be more favorably achieved.

The cap tread rubber composition may contain a wax.

The wax is not particularly limited, and examples of the wax include: petroleum waxes such as paraffin wax

and microcrystalline wax; natural waxes such as vegetable wax and animal wax; and synthesized waxes such as polymers of ethylene, propylene, and the like. As commercially available products, products of Ouchi Shinko Chemical Industrial Co., Ltd., NIPPON SEIRO CO., LTD., Seiko Chemical Co., Ltd., etc., can be used. One of these waxes may be used alone, or two or more of these waxes may be used in combination.

In the case where the cap tread rubber composition contains a wax, the amount of the wax per 100 parts by mass of the rubber component is preferably not less than 0.5 parts by mass and more preferably not less than 1 part by mass. Meanwhile, the amount is preferably not greater than 5 parts by mass and more preferably not greater than 3 parts by mass. When the amount is within the above range, the effects tend to be more favorably achieved.

The cap tread rubber composition may contain an oil.

Examples of the oil include process oils, vegetable fats and oils, and mixtures thereof. As the process oil, for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. One of these oils may be used alone, or two or more of these oils may be used in combination.

In the case where the cap tread rubber composition contains an oil, the amount of the oil per 100 parts by mass of the rubber component is preferably not less than 5 parts by mass and more preferably not less than 15 parts by mass, and is preferably not greater than 40 parts by mass and more preferably not greater than 30 parts by mass.

The cap tread rubber composition may contain an antioxidant.

Examples of the antioxidant include: naphthylamine antioxidants such as phenyl-$\alpha$-naphthylamine; diphenylamine antioxidants such as octylated diphenylamine and 4,4'-bis($\alpha$,$\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., Ouchi Shinko Chemical Industrial Co., Ltd., Flexsys, etc., can be used. One of these antioxidants may be used alone, or two or more of these antioxidants may be used in combination.

In the case where the cap tread rubber composition contains an antioxidant, the amount of the antioxidant per 100 parts by mass of the rubber component is preferably not less than 0.5 parts by mass and more preferably not less than 0.8 parts by mass, and is preferably not greater than 5 parts by mass, more preferably not greater than 2 parts by mass, and further preferably not greater than 1 part by mass. When the amount is within the above range, the effects tend to be more favorably achieved.

The cap tread rubber composition may contain stearic acid.

As the stearic acid, conventionally known stearic acids can be used. As commercially available products, products of NOF Corporation, Kao Corporation, FUJIFILM Wako Pure Chemical Corporation, New Japan Chemical Co., Ltd., etc., can be used. One of these stearic acids may be used alone, or two or more of these stearic acids may be used in combination.

In the case where the cap tread rubber composition contains stearic acid, the amount of the stearic acid per 100 parts by mass of the rubber component is preferably not less than 1 part by mass and more preferably not less than 2 parts by mass, and is preferably not greater than 10 parts by mass and more preferably not greater than 5 parts by mass. When the amount is within the above range, the effects tend to be more favorably achieved.

The cap tread rubber composition may contain zinc oxide.

As the zinc oxide, conventionally known zinc oxides can be used. As commercially available products, products of Mitsui Mining & Smelting Co., Ltd., Toho Zinc Co., Ltd., HAKUSUI TECH CO., LTD., SEIDO CHEMICAL INDUSTRY CO., LTD., Sakai Chemical Industry Co., Ltd., etc., can be used. One of these zinc oxides may be used alone, or two or more of these zinc oxides may be used in combination.

In the case where the cap tread rubber composition contains zinc oxide, the amount of the zinc oxide per 100 parts by mass of the rubber component is preferably not less than 1 part by mass and more preferably not less than 2 parts by mass, and is preferably not greater than 10 parts by mass and more preferably not greater than 6 parts by mass. When the amount is within the above range, the effects tend to be more favorably achieved.

The cap tread rubber composition may contain sulfur.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

In the case where the cap tread rubber composition contains sulfur, the amount of the sulfur per 100 parts by

mass of the rubber component is preferably not less than 0.5 parts by mass and more preferably not less than 1 part by mass, and is preferably not greater than 5 parts by mass, more preferably not greater than 3 parts by mass, and further preferably not greater than 2 parts by mass. When the amount is within the above range, the effects tend to be more favorably achieved.

The cap tread rubber composition may contain a vulcanization accelerator.

Examples of the vulcanization accelerator include: thiazole-based vulcanization accelerators such as 2-mercaptobenzothiazole and di-2-benzothiazolyl disulfide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazolyl sulfenamide (CBS), N-tert-butyl-2-benzothiazolyl sulfenamide (TBBS), N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. As commercially available products, products of Sumitomo Chemical Co., Ltd., Ouchi Shinko Chemical Industrial Co., Ltd., etc., can be used. These vulcanization accelerators may be used individually, or two or more of these vulcanization accelerators may be used in combination.

In the case where the cap tread rubber composition contains a vulcanization accelerator, the amount of the vulcanization accelerator per 100 parts by mass of the rubber component is preferably not less than 1.5 parts by mass, more preferably not less than 2.5 parts by mass, and further preferably not less than 3.5 parts by mass, and is preferably not greater than 8 parts by mass and more preferably not greater than 5 parts by mass. When the amount is within the above range, the effects tend to be more favorably achieved.

In addition to the above-described components, additives that are generally used in the tire industry, such as: organic peroxides; fillers such as calcium carbonate, talc, alumina, clay, aluminum hydroxide, and mica; and the like, may be further blended in the cap tread rubber composition. Each of the amounts of these additives per 100 parts by mass of the rubber component is preferably 0.1 to 200 parts by mass.

The cap tread rubber composition can be produced, for example, by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally not higher than 120°C and is preferably 85 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C. The vulcanization time is normally 5 to 15 minutes.

<Base Tread Rubber Composition>

For the above-described base tread rubber composition, chemicals that are the same as those of the cap tread rubber composition can be used.

In the base tread rubber composition, as the rubber component, the above-described hydrogenated copolymer, NR, and BR are preferable, and NR and BR are more preferable.

In the base tread rubber composition, the amount of the hydrogenated copolymer per 100 % by mass of the rubber component is preferably not greater than 50% by mass, more preferably not greater than 30% by mass, and further preferably not greater than 10% by mass, and may be 0% by mass. When the amount is within the above range, the effects tend to be more favorably achieved.

As the NR, NRs that are generally used in the tire industry, such as SIR20, RSS#3, and TSR20 can be used. One of these NRs may be used alone, or two or more of these NRs may be used in combination.

In the case where the base tread rubber composition contains an NR, the amount of the NR in 100% by mass of the rubber component is preferably not less than 40% by mass and more preferably not less than 60% by mass, and is preferably not greater than 90% by mass and more preferably not greater than 80% by mass. When the amount is within the above range, the effects tend to be more favorably achieved.

In the case where the base tread rubber composition contains a BR, the amount of the BR in 100% by mass of the rubber component is preferably not less than 10% by mass and more preferably not less than 20% by mass, and is preferably not greater than 60% by mass and more preferably not greater than 40% by mass. When the amount is within the above range, the effects tend to be more favorably achieved.

In the case where the base tread rubber composition contains carbon black, the amount of the carbon black per 100 parts by mass of the rubber component is preferably not less than 10 parts by mass and more preferably not less than 20 parts by mass, and is preferably not greater than 40 parts by mass and more preferably not greater than 30 parts by mass. When the amount is within the above range, the effects of the present invention are more favorably

achieved.

The nitrogen adsorption specific surface area ($N_2SA$) of the carbon black is preferably not less than 50 $m^2/g$ and more preferably not less than 70 $m^2/g$, and is preferably not greater than 90 $m^2/g$ and more preferably not greater than 80 $m^2/g$. When the $N_2SA$ is within the above range, the effects tend to be more favorably achieved.

In the case where the base tread rubber composition contains silica, the amount of the silica per 100 parts by mass of the rubber component is preferably not less than 10 parts by mass and more preferably not less than 30 parts by mass, and is preferably not greater than 80 parts by mass and more preferably not greater than 50 parts by mass. When the amount is within the above range, the effects tend to be more favorably achieved.

In the case where the base tread rubber composition contains a silane coupling agent, the amount of the silane coupling agent per 100 parts by mass of the silica is preferably not less than 1 part by mass and more preferably not less than 3 parts by mass, and is preferably not greater than 12 parts by mass and more preferably not greater than 8 parts by mass. When the amount is within the above range, the effects tend to be more favorably achieved.

In addition to the above-described components, a wax, stearic acid, an antioxidant, zinc oxide, sulfur, a vulcanization accelerator, etc., may be blended as appropriate in the base tread rubber composition.

The base tread rubber composition can be produced by the same method under the same conditions as the cap tread rubber composition.

<Pneumatic Tire>

The pneumatic tire according to the present invention is produced by a normal method using the above-described cap tread rubber composition and the above-described base tread rubber composition.

Specifically, the cap tread rubber composition and the base tread rubber composition are extruded in an unvulcanized state so as to correspond to the shape of a cap tread and the shape of a base tread, respectively, and are formed together with other tire members on a tire forming machine by a general method, thereby forming an unvulcanized tire. The unvulcanized tire is heated and pressurized in a vulcanizing machine, thereby obtaining a tire including a tread portion in which a cap tread and a base tread are layered

In the pneumatic tire, the hardness of the cap tread rubber composition after vulcanization is preferably not less than 55, more preferably not less than 60, and further preferably not less than 65, and is preferably not greater than 75, more preferably not greater than 70, and further preferably not greater than 68. The hardness of the base tread rubber composition after vulcanization is preferably not less than 55, more preferably not less than 60, and further preferably not less than 65, and is preferably not greater than 75, more preferably not greater than 70, and further preferably not greater than 68. When each hardness is within the above range, the effects tend to be more favorably achieved.

The hardness after vulcanization is measured at 25°C according to JIS K 6253-1: 2012 using a type A durometer.

The difference between the hardness of the cap tread rubber composition after vulcanization and the hardness of the base tread rubber composition after vulcanization is preferably not greater than 6, more preferably not greater than 5, further preferably not greater than 4, and particularly preferably not greater than 1, and may be 0 (the hardnesses after vulcanization may be substantially equal to each other). When the difference is within the above range, the effects tend to be more favorably achieved.

The hardness after vulcanization can be adjusted by a method such as adjustment of the amount of a filler such as silica and carbon black, the amount of sulfur, the amount of a vulcanization accelerator, the amount of a softener such as oil, etc.; and use of fillers having different particle diameters. Specifically, the hardness after vulcanization can be increased, for example, by increasing the amounts of the filler, the sulfur, and the vulcanization accelerator, decreasing the amount of the softener, or using a filler having a small particle diameter, and the hardness adjustment is possible according to such a tendency.

The pneumatic tire is used as a tire for a passenger car, a tire for a truck or a bus, a tire for a two-wheeled automotive vehicle, a tire for racing, etc., and is particularly suitable for use as a tire for a passenger car.

## EXAMPLES

The present invention will be specifically described by means of examples, but the present invention is not limited to these examples.

<Synthesis of Copolymer>

(Synthesis Example 1 (Synthesis of Copolymer (1): modified SBR having a degree of hydrogenation of 0 mol%))

To a sufficiently nitrogen-purged heat-resistant reaction vessel, 2,000 mL of n-hexane, 60 g of styrene, 140 g

of 1,3-butadiene, 0.93 g of N,N,N',N'-tetramethylethylenediamine (TMEDA), and 0.45 mmol of n-butyllithium were added, followed by stirring at 50°C for five hours, to cause a polymerization reaction. Thereafter, 0.15 mol of a modifier (N,N-bis(trimethylsilyl)aminopropylmethyldiethoxysilane) was added to the reaction solution, followed by stirring at 0°C for one hour. Thereafter, the polymerization reaction was terminated by addition of methanol. 1 g of 2,6-di-tert-butyl-p-cresol was added to the reaction solution, and then the resulting solution was purified by reprecipitation to obtain a copolymer (1). The obtained copolymer (1) had a weight-average molecular weight (Mw) of 490,000 and a styrene content of 30% by mass.

(Synthesis Example 2 (Synthesis of Copolymer (2): hydrogenated modified SBR having a degree of hydrogenation of 80 mol%))

A copolymer (2) was obtained in the same manner as the copolymer (1), except that the obtained polymer was hydrogenated. Specifically, after the polymerization conversion reaction and the modification reaction for the copolymer (1), the polymerization reaction was not terminated by addition of alcohol. Instead, the reaction solution was then stirred for 20 minutes, while supplying hydrogen gas at a pressure of 0.4 MPa gauge, to react the unreacted polymer terminal lithium with hydrogen into lithium hydride. Hydrogenation was conducted using a titanocene dichloride-based catalyst at a hydrogen gas supply pressure of 0.7 MPa gauge and a reaction temperature of 90°C. When the cumulative amount of absorbed hydrogen reached the amount corresponding to the target degree of hydrogenation, the reaction temperature was set to room temperature, the hydrogen pressure was returned to ordinary pressure, and the reaction solution was taken out from the reaction vessel and stirred into water. The solvent was removed by steam stripping to obtain the copolymer (2). The copolymer (2) had a degree of hydrogenation of 80 mol%, a weight-average molecular weight (Mw) of 480,000, and a styrene content of 30% by mass.

(Synthesis Example 3 (Synthesis of Copolymer (3): hydrogenated modified SBR having a degree of hydrogenation of 90 mol%))

A copolymer (3) was obtained in the same manner as the copolymer (2), except that the cumulative amount of absorbed hydrogen was adjusted so as to correspond to the target degree of hydrogenation. The obtained copolymer (3) had a degree of hydrogenation of 90 mol%, a weight-average molecular weight (Mw) of 480,000, and a styrene content of 30% by mass.

(Synthesis Example 4 (Synthesis of Copolymer (4): hydrogenated modified SBR having a degree of hydrogenation of 95 mol%))

A copolymer (4) was obtained in the same manner as the copolymer (2), except that the cumulative amount of absorbed hydrogen was adjusted so as to correspond to the target degree of hydrogenation. The obtained copolymer (4) had a degree of hydrogenation of 95 mol%, a weight-average molecular weight (Mw) of 450,000, and a styrene content of 30% by mass.

<Synthesis of SBR>

A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, 1,3-butadiene was added to the reaction solution, and further polymerization was carried out for five minutes. Thereafter, N, N-bis (trimethylsilyl)-3-aminopropyltrimethoxysilane was added as a modifier to cause a reaction. After the end of the polymerization reaction, 2,6-di-tert-butyl-p-cresol was added to the solution. Subsequently, the solvent was removed by steam stripping to obtain an SBR (modified SBR).

<Synthesis of BR (2)>

A nitrogen-purged autoclave reactor was charged with hexane, 1,3-butadiene, tetrahydrofuran, and ethylene glycol diethyl ether. Next, n-butyllithium was added as a cyclohexane solution to initiate polymerization.

The stirring rate was set to 130 rpm, the temperature in the reactor was set to 65°C, and polymerization of 1,3-butadiene was carried out for three hours while continuously supplying the monomer into the reactor. Next, the obtained polymer solution was stirred at a stirring rate of 130 rpm, 3-dimethylaminopropyltrimethoxysilane was added to the polymer solution, and reaction was carried out for 15 minutes. After the end of the polymerization reaction, 2,6-di-tert-butyl-p-cresol was added to the solution. Subsequently, the solvent was removed by steam stripping and drying was performed by a heat roll adjusted to 110°C to obtain a BR (2) (modified BR).

Various chemicals used in examples and comparative examples are described below.

<Chemicals Used in Cap Tread Rubber Composition (Table 1)>

Copolymers (1) to (4): synthesized by the above methods
SBR: synthesized by the above method (styrene content: 40% by mass, vinyl content: 32% by mass, Mw: 950 thousand)
BR (1): UBEPOL BR150B (cis content: 97% by mass) manufactured by Ube Industries, Ltd.
Carbon black (1): DIABLACK N339 ($N_2SA$: 96 $m^2/g$) manufactured by Mitsubishi Chemical Corporation
Silica: ULTRASIL VN3 ($N_2SA$: 180 $m^2/g$) manufactured by EVONIK
Silane coupling agent: Si69 (bis(3-triethoxysilylpropyl)tetrasulfide) manufactured by EVONIK
Oil: VivaTec 400 (TDAE oil) manufactured by H&R
Stearic acid: bead stearic acid, Tsubaki, manufactured by NOF Corporation
Zinc oxide: Zinc Oxide No. 1 manufactured by Mitsui Mining & Smelting Co., Ltd.
Antioxidant: ANTIGENE 3C manufactured by Sumitomo Chemical Co., Ltd.
Wax: SUNNOC N manufactured by Ouchi Shinko Chemical Industrial Co., Ltd.
Sulfur: powdery sulfur manufactured by Tsurumi Chemical Industry Co., Ltd.
Vulcanization accelerator TBBS: NOCCELER NS (N-tert-butyl-2-benzothiazyl sulfenamide (TBBS)) manufactured by Ouchi Shinko Chemical Industrial Co., Ltd.
Vulcanization accelerator DPG: NOCCELER D (N, N'-diphenylguanidine (DPG)) manufactured by Ouchi Shinko Chemical Industrial Co., Ltd.

<Chemicals Used in Base Tread Rubber Composition (Table 2)>

NR: TSR20
BR (1): UBEPOL BR150B (cis content: 97% by mass) manufactured by Ube Industries, Ltd.
BR (2): synthesized by the above method (cis content: 40% by mass)
Carbon black (2): SHOBLACK N330 ($N_2SA$: 75 $m^2/g$) manufactured by Cabot Japan K.K.
Silica: ULTRASIL VN3 ($N_2SA$: 180 $m^2/g$) manufactured by EVONIK
Silane coupling agent: Si69 (bis(3-triethoxysilylpropyl)tetrasulfide) manufactured by EVONIK
Oil: VivaTec 400 (TDAE oil) manufactured by H&R
Stearic acid: bead stearic acid, Tsubaki, manufactured by NOF Corporation
Zinc oxide: Zinc Oxide No. 1 manufactured by Mitsui Mining & Smelting Co., Ltd.
Antioxidant: ANTIGENE 3C manufactured by Sumitomo Chemical Co., Ltd.
Wax: SUNNOC N manufactured by Ouchi Shinko Chemical Industrial Co., Ltd.
Sulfur: powdery sulfur manufactured by Tsurumi Chemical Industry Co., Ltd.
Vulcanization accelerator TBBS: NOCCELER NS (N-tert-butyl-2-benzothiazyl sulfenamide (TBBS)) manufactured by Ouchi Shinko Chemical Industrial Co., Ltd.
Vulcanization accelerator CBS: NOCCELER CZ (N-cyclohexyl-2-benzothiazolyl sulfenamide (CBS)) manufactured by Ouchi Shinko Chemical Industrial Co., Ltd.

<Examples and Comparative Examples>

(Production of Cap Tread Rubber Composition)

In accordance with each of the blending contents shown in Table 1, the materials other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized cap tread rubber composition. The obtained unvulcanized cap tread rubber composition was press-vulcanized at 170°C for 20 minutes by using a mold having a thickness of 0.5 mm to obtain a cap tread rubber composition.

(Production of Base Tread Rubber Composition)

In accordance with each of the blending contents shown in Table 2, the materials other than the sulfur and the vulcanization accelerator were kneaded under a condition of 150°C for 5 minutes by using a 1.7-L Banbury mixer manufactured by Kobe Steel, Ltd., to obtain a kneaded product. Next, the sulfur and the vulcanization accelerator were added to the obtained kneaded product, and the mixture was kneaded under a condition of 80°C for 5 minutes by using an open roll, to obtain an unvulcanized base tread rubber composition. The obtained unvulcanized base tread rubber composition was press-vulcanized at 170°C for 20 minutes by using a mold having a thickness of 0.5 mm to obtain a base tread rubber composition.

(Production of Test Tire)

The unvulcanized cap tread rubber composition obtained above and the unvulcanized base tread rubber composition obtained above were formed into the shape of a cap tread and the shape of a base tread, respectively, and attached together with other tire members on a tire forming machine to form an unvulcanized tire. The unvulcanized tire was vulcanized at 170°C for 10 minutes to obtain a test tire having a size of 215/55R17.

(Hardness)

The hardnesses of the cap tread rubber composition and the base tread rubber composition obtained above were measured at 25°C according to JIS K 6253-1: 2012 using a type A durometer. The results are shown in Table 1.

(EB Change Index)

A dumbbell type test piece was cut out from the cap tread of the above test tire, elongation at break (EB (%)) before and after ozone deterioration was measured, and an EB change index was calculated from the following formula. The results are shown in Table 1. When the index is equal to or higher than 100, the elongation at break after ozone deterioration is equal to or greater than that before ozone deterioration, and the above formula (A) is satisfied.

$$(\text{EB change index}) = (\text{EB after ozone deterioration})/(\text{EB before ozone deterioration}) \times 100$$

(Adhesive Force (MPa) between Cap Tread Rubber Composition and Base Tread Rubber Composition)

A strip-shaped sample was produced by interposing a PET film having a 1 cm square hole between a 2 mm-thick sheet formed from the unvulcanized cap tread rubber composition obtained above and a 2 mm-thick sheet formed from the unvulcanized base tread rubber composition obtained above, vulcanizing this stack at 170°C for 12 minutes, and adhering the PET film and the sheets only at the hole portion of the PET film. A peeling test was carried out according to JIS K6256-1: 2013 at a tensile speed of 50 mm/min at 23°C using the sample, to measure an adhesive force (MPa). The results are shown in Table 1.

In the test, a stack of the cap tread and the base tread cut out from the tire may be used as a sample. In this case, the same results are obtained.

(High Speed Durability Index)

The above test tire was mounted to a rim (17×7.00JJ) and inflated to an internal pressure of 300 kPa, and a test was carried out using a drum tester by a step speed method according to the load/speed performance test specified by ECE30. In the test, the running speed was sequentially increased, and the speed and the time when the tire was broken were measured. The results are shown as indexes with the value of Comparative Example 1 being 100. A higher index indicates that the durability (high speed durability) is better. An index of 80 or higher was determined as acceptable.

(Ozone Resistance)

According to JIS K 6259-1: 2015 "Rubber, vulcanized or thermoplastic-Determination of ozone resistance", the above test tire was caused to run in a control room with a temperature of 40°C and an ozone concentration of 50 ppm for 30,000 km, and then the number of cracks and crack depth on the cap tread surface were visually observed and

evaluated by the following five criteria. A higher numeral indicates that the ozone resistance is better. 3 or higher was determined as acceptable.

5: No crack number and crack depth, and excellent.
4: Almost no crack number and crack depth, and good.
3: Degree of crack number and crack depth is low.
2: Degree of crack number and crack depth is medium.
1: Degree of crack number and crack depth is high.

[Table 1]

| | | Comparative Example | | Example | | | | | | |
|---|---|---|---|---|---|---|---|---|---|---|
| | | 1 | 2 | 1 | 2 | 3 | 4 | 5 | 6 | 7 |
| Cap tread rubber composition | | | | | | | | | | |
| Blending formula (parts by mass) | Copolymer (1) degree of hydrogenation: 0 mol% | 30 | | | | | | | | |
| | Copolymer (2) degree of hydrogenation: 80 mol% | | | | 30 | | | 50 | | |
| | Copolymer (3) degree of hydrogenation: 90 mol% | | 30 | 30 | | | 50 | | | 70 |
| | Copolymer (4) degree of hydrogenation: 95 mol% | | | | | 30 | | | 50 | |
| | SBR | 50 | 50 | 50 | 50 | 50 | 40 | 40 | 40 | 20 |
| | BR (1) | 20 | 20 | 20 | 20 | 20 | 10 | 10 | 10 | 10 |
| | Carbon black (1) | 10 | 10 | 10 | 10 | 10 | 10 | 10 | 10 | 10 |
| | Silica | 80 | 80 | 80 | 80 | 80 | 80 | 80 | 80 | 80 |
| | Silane coupling agent | 6.4 | 6.4 | 6.4 | 6.4 | 6.4 | 6.4 | 6.4 | 6.4 | 6.4 |
| | Oil | 25 | 25 | 25 | 25 | 25 | 25 | 25 | 25 | 25 |
| | Stearic acid | 2 | 2 | 2 | 2 | 2 | 2 | 2 | 2 | 2 |
| | Zinc oxide | 2 | 2 | 2 | 2 | 2 | 2 | 2 | 2 | 2 |
| | Antioxidant | 1 | 1 | 1 | 1 | 1 | 1 | 1 | 1 | 1 |
| | Wax | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 |
| | Vulcanization accelerator TBBS | 1.5 | 1.5 | 1.5 | 1.5 | 1.5 | 1.5 | 1.5 | 1.5 | 1.5 |
| | Vulcanization accelerator DPG | 2 | 2 | 2 | 2 | 2 | 2 | 2 | 2 | 2 |
| | Hardness | 64 | 65 | 65 | 65 | 66 | 70 | 69 | 71 | 70 |
| | EB change index | 95 | 105 | 105 | 102 | 110 | 108 | 104 | 124 | 128 |
| Base tread rubber composition | | | | | | | | | | |
| | Type | A | B | A | A | A | A | A | A | A |
| | Hardness | 65 | 70 | 65 | 65 | 65 | 65 | 65 | 65 | 65 |
| Adhesive force (MPa) between cap tread rubber composition and base tread rubber composition | | 23 | 5 | 18 | 21 | 16 | 15 | 18 | 13 | 9 |
| High speed durability index | | 100 | 70 | 95 | 100 | 91 | 89 | 94 | 85 | 81 |
| Ozone resistance | | 2 | 4 | 4 | 3 | 4 | 5 | 4 | 5 | 5 |

[Table 2]

| Base tread rubber composition | | A | B |
|---|---|---|---|
| Blending formula (parts by mass) | NR | 75 | 65 |
| | BR (1) | 25 | 17.5 |
| | BR (2) | | 17.5 |
| | Carbon black (2) | 30 | 20 |
| | Silica | | 30 |
| | Silane coupling agent | | 2.4 |
| | Oil | 7 | 2 |
| | Stearic acid | 2 | 2 |
| | Zinc oxide | 3 | 2 |
| | Antioxidant | 2.5 | 3.5 |
| | Wax | 1 | 1.5 |
| | Sulfur | 2.5 | 2.5 |
| | Vulcanization accelerator TBBS | 1 | 2 |
| | Vulcanization accelerator CBS | 0.4 | |

From Tables 1 and 2, excellent durability and ozone resistance were achieved in the Examples in which the adhesive force between the cap tread rubber composition and the base tread rubber composition is not less than 9 MPa and the EB change index of the cap tread rubber composition is not less than 100.

## Claims

1. A pneumatic tire comprising a tread portion in which a cap tread and a base tread are layered, wherein
an adhesive force between a cap tread rubber composition forming the cap tread and a base tread rubber composition forming the base tread is not less than 9 MPa, and
the cap tread rubber composition satisfies the following formula (A),
elongation at break before ozone deterioration ≤ elongation at break after ozone deterioration (A).

2. The pneumatic tire according to claim 1, wherein
a rubber component of the cap tread rubber composition includes a hydrogenated copolymer that has aromatic vinyl moieties as constituent units based on an aromatic vinyl compound and conjugated diene moieties as constituent units based on a conjugated diene compound and in which a degree of hydrogenation of the conjugated diene moieties is not less than 75 mol%, and
an amount of the hydrogenated copolymer in 100% by mass of the rubber component is not greater than 50% by mass.

3. The pneumatic tire according to claim 2, wherein the amount of the hydrogenated copolymer in 100% by mass of the rubber component is 30 to 50% by mass.

Europäisches Patentamt
European Patent Office
Office européen des brevets

# EUROPEAN SEARCH REPORT

Application Number
EP 19 20 6965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 2 995 472 A1 (SUMITOMO RUBBER IND [JP]) 16 March 2016 (2016-03-16)<br>* claims 1-6 * | 1-3<br>1-3 | INV.<br>C08C19/02<br>B60C1/00<br>C08L9/06<br>C08L15/00 |
| Y | EP 3 326 838 A1 (SUMITOMO RUBBER IND [JP]) 30 May 2018 (2018-05-30)<br>* paragraph [0105]; claims 1-9; examples 1-12; tables 1,2 * | 1-3 | |
| L | EP 2 565 053 A1 (GOODYEAR TIRE & RUBBER [US]) 6 March 2013 (2013-03-06)<br>* claims 1-8; examples 1,2; tables 1,2 * | 1-3 | |
| L | US 2005/209394 A1 (SANDSTROM PAUL H [US] ET AL) 22 September 2005 (2005-09-22)<br>* examples 1-4; tables 1-4 * | 1-3 | |
| L | US 2002/143095 A1 (ZANZIG DAVID JOHN [US] ET AL) 3 October 2002 (2002-10-03)<br>* paragraph [0091]; tables 2,4 * | 1-3 | TECHNICAL FIELDS SEARCHED (IPC) |
| A | US 2015/174963 A1 (ZHAO JUNLING [US] ET AL) 25 June 2015 (2015-06-25)<br>* claims 1-15 * | 1-3 | C08C<br>B60C<br>C08L |

The present search report has been drawn up for all claims

1

| Place of search | Date of completion of the search | Examiner |
|---|---|---|
| Munich | 17 December 2019 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 19 20 6965

This annex lists the patent family members relating to the patent documents cited in the above-mentioned European search report. The members are as contained in the European Patent Office EDP file on
The European Patent Office is in no way liable for these particulars which are merely given for the purpose of information.

17-12-2019

| Patent document cited in search report | Publication date | Patent family member(s) | Publication date |
|---|---|---|---|
| EP 2995472 A1 | 16-03-2016 | EP 2995472 A1 | 16-03-2016 |
| | | JP 6180390 B2 | 16-08-2017 |
| | | JP 2016055769 A | 21-04-2016 |
| EP 3326838 A1 | 30-05-2018 | CN 108084532 A | 29-05-2018 |
| | | EP 3326838 A1 | 30-05-2018 |
| | | JP 2018083884 A | 31-05-2018 |
| | | US 2018142089 A1 | 24-05-2018 |
| EP 2565053 A1 | 06-03-2013 | EP 2565053 A1 | 06-03-2013 |
| | | US 2013048179 A1 | 28-02-2013 |
| US 2005209394 A1 | 22-09-2005 | NONE | |
| US 2002143095 A1 | 03-10-2002 | BR 0200186 A | 22-10-2002 |
| | | DE 60218555 T2 | 08-11-2007 |
| | | EP 1228898 A1 | 07-08-2002 |
| | | US 2002143095 A1 | 03-10-2002 |
| US 2015174963 A1 | 25-06-2015 | BR 102014030990 A2 | 06-10-2015 |
| | | US 2015174963 A1 | 25-06-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016039005 A
- JP H1275605 B
- JP H5271326 B
- JP H5271325 B
- JP H5222115 B
- JP H11292924 B
- JP 2000037632 A
- JP S59133203 B
- JP S635401 B
- JP S62218403 B
- JP H790017 B
- JP S4319960 B
- JP S4740473 B